# EUROPEAN PATENT SPECIFICATION

(11) **EP 2 975 004 B1**
(45) Date of publication and mention of the grant of the patent: **30.08.2017**
(21) Application number: 14177392.9
(22) Date of filing: 17.07.2014
(51) Int. Cl.: C02F 1/66, C02F 1/52, C02F 1/38, C02F 1/00, C02F 101/10, C02F 101/20, C02F 103/10, C02F 103/14, C02F 103/16, C02F 103/24, C02F 103/32

(54) **ACID WASTEWATER TREATMENT**
Behandlung von saurem Abwasser
Traitement d'effluents acides

(43) Date of publication of application: 20.01.2016
(73) Proprietor: Omya International AG, 4665 Oftringen (CH)
(72) Inventor: Poffet, Martine, 4600 Olten (CH); Skovby, Michael, 8706 Meilen (CH); Riepl, Herbert, 9585 Gödersdorf (AT); Pohl, Michael, 9500 Villach (AT)
(74) Representative: Boos, Melanie

(56) References cited:
- EP-A1- 2 633 905
- DE-A1-102007 043 751
- FR-A1- 2 382 406
- US-A- 3 617 560
- US-A- 3 617 562
- US-A- 4 171 342
- US-A- 4 208 393

## Description

The invention relates to a process for the selective precipitation of at least one conjugate base and/or at least one metal cation from an acidic preparation by neutralization as well as the use of an aqueous slurry of at least one calcium carbonate source for the selective precipitation of at least one conjugate base and/or at least one metal cation from an acidic preparation by neutralization.

Many industries such as the brewing or other beverage industries, the paper industry, battery and battery recycling industry, colour, paints or coatings industries, galvanizing industry, mining industry, agricultural industry, leather and leather tanning industry as well as sewage plants are dependent on processes that produce wastewaters or use process water. In this regard, it is to be noted that wastewater-producing industries are subject to increasing legal and environmental restriction. For example, these industries are obliged by law to reuse the wastewater internally in their processes or to treat the wastewater if it is considered for further disposal in the environment or in a municipal wastewater treatment plant. However, such wastewaters and process waters are typically of acidic character and/or comprise metal cations, such as from heavy metals, and thus require a special treatment in order to neutralize them and, if metal contaminants are present, to remove the metal cations from the wastewater and process water. The treatment of such wastewaters and/or process waters is gaining more and more importance for environmental and economic reasons.

In order to treat wastewaters and/or process waters by neutralization or to remove metal cations from such preparations, several processes are known, such as those disclosed in US 4 171 342 A, US 4 208 393 A, DE 10 2007 043751 A1, US 3 617 562 A, US 3 617560 A or EP 2 633 905 A1. Conventional processes that are mainly used for the treatment of acidic wastewaters are based on dosing milk of lime, i.e. an aqueous suspension of calcium hydroxide (Ca(OH)₂) and/or on dosing sodium hydroxide, i.e. in aqueous form such as a suspension or solution of sodium hydroxide (NaOH), which is also sometimes used more specifically for initial pH increase. An alternative process has been developed by Provalva, France, called Neutracalc®. This technology is based on the use of calcium carbonate (CaCO₃) instead of Ca(OH)₂, and the use of the reagent (i.e. calcium carbonate) in powder form in contrast to the use of a suspension (milk of lime) reduces the consumption of water for this purpose.

The process above is also described in EP 1 658 238 B1 referring to an application for the treatment of an aqueous acidic liquid containing heavy metals. In particular, the process is described for treating acid wastes at very high concentration by dosing a CaCO₃ powder directly onto the concentrated acids. In order to overcome the foam formation, occurring primarily by CO₂ generation during the dosing of the CaCO₃ powder directly on/into the strong acid, a specific technology has been developed. However, reducing the CO₂-footprint is becoming more and more important for the industry in order to be more environmentally friendly. The dosing of CaCO₃ powder to the acidic wastewater results in a strong reaction and a build-up of a relatively large amount of CO₂. A further disadvantage of this method is that various heavy metals that may be present in the acidic wastewater cannot be separately collected and precipitated in one process but require different processes specifically adapted to the solubility pH of each single heavy metal to be precipitated.

In view of the foregoing, it still remains of interest to the skilled man to improve the treatment or neutralization of acidic preparations and/or the selective precipitation of metal cations from such acidic preparations. It would be especially desirable to provide an alternative or improved process for the neutralization of acidic preparations and/or the selective precipitation of metal cations from such acidic preparations which can be carried out in a more efficient, economic and ecologic way and especially allows the continuous neutralization of acidic preparations and/or the selective precipitation of metal cations from such acidic preparations. In particular, it is desirable to provide a "milder" reaction with the acidic preparation such that the build-up of CO₂ is reduced, avoiding the formation of excessive foam and pressure in the process, as well as to avoid adding excessive water to the process in order to improve the water footprint. In addition thereto, it is desirable that metal cations, such as heavy metal cations, can be separately precipitated and collected in one process and that the process would require standard process pieces of equipment, such as appropriate mixing and, preferably, recirculating. In this regard, it is further to be noted that acidic preparations may vary in composition and acidity and thus it is desirable that the pH for precipitating conjugate bases and/or metal cations from the preparation can be adapted to the specific needs.

In order to fulfil the foregoing need(s) a process according to the subject-matter as defined herein in claim 1 is provided.

Advantageous embodiments of the inventive method are defined in the corresponding sub-claims and the specification.

According to one aspect of the present invention, a process for the selective precipitation of at least one conjugate base and/or at least one metal cation from an acidic preparation by neutralization is provided, the process comprising the steps of:
a) providing at least one calcium carbonate source having a weight median particle size *d*₅₀ from 0.1 to 500.0 µm in the form of a powder or an aqueous slurry,
b) providing an aqueous solution having a pH value from 0.0 to 7.0,
c) providing an acidic preparation comprising at least one conjugate base and/or at least one metal cation,
d) contacting the aqueous solution of process step b) with the at least one calcium carbonate source of process step a) for obtaining an aqueous slurry in which at least a part of the at least one calcium carbonate source is dissolved in the water phase of the aqueous slurry as calcium hydrogen carbonate,
e) contacting the acidic preparation of process step c) with the aqueous slurry obtained in process step d) for adjusting the pH of the resulting reaction mixture to a pH value being higher than the pH value of the acidic preparation of process step c) for precipitating the at least one conjugate base and/or the at least one metal cation from the acidic preparation as water insoluble salt/salts and optionally process step f) of stepwise increasing the pH value of the supernatant of the reaction mixture obtained in process step e), wherein contacting step d) is carried out in that the pH value of the aqueous solution provided in process step b) is adjusted to a targeted pH by
   i) the addition of the at least one calcium carbonate source provided in process step a), and/or
   ii) the addition of the supernatant of the reaction mixture obtained in process step e) and/or process step f) if present and
   wherein the process is a continuous process, wherein the supernatant of the reaction mixture obtained after separating the water insoluble salt/salts of the at least one conjugate base and/or the at least one metal cation from the reaction mixture is used as the aqueous solution of process step b).
The inventors surprisingly found that the foregoing process allows for the efficient and controlled neutralization of acidic preparations by the selective removal of conjugate bases and/or metal cations from such acidic preparations. According to the process of the present invention, the process can be carried out under improved or optimized CO₂ and water footprints and, further, conjugate bases and/or metal cations can be separately collected and precipitated in one process without the need of special equipment. More precisely, the inventors found out that the neutralization of acidic preparations by the selective removal of conjugate bases and/or metal cations from such acidic preparations can be improved or optimized by specifically implementing a step of preparing an aqueous slurry in which at least a part of the at least one calcium carbonate source is dissolved in the water phase, which corresponds to the aqueous solution obtained after separating the water insoluble salt/salts of the at least one conjugate base and/or the at least one metal cation from the reaction mixture of the aqueous slurry as calcium hydrogen carbonate and contacting the acidic preparation with said aqueous slurry.

It should be understood that for the purposes of the present invention, the following terms have the following meanings:
As used herein, the term "neutralization" refers to the treatment of an acidic preparation by using an aqueous slurry in which at least a part of the at least one calcium carbonate source is dissolved in the water phase of the aqueous slurry as calcium hydrogen carbonate such that the pH value of the acidic preparation increases, e.g. by a pH value of at least 0.1. Accordingly, it is not excluded that the pH value of the treated and neutralized acidic preparation differs from a neutral pH, i.e. a pH of about 7. Thus, it is appreciated that the pH value of the treated and neutralized acidic preparation can be from 1 to 12, preferably from 3 to 10 and most preferably from 5 to 8.

In general, the term "acidic preparation" in the meaning of the present invention refers to a system having a pH value being from -1.0 to 7.

The term at least one "conjugate base" as used in the present invention refers to at least one monovalent and/or divalent and/or trivalent conjugate base resulting from the dissociation of acids present in the acidic preparation and thus a solution of the at least one monovalent and/or divalent and/or trivalent conjugate base and the acidic preparation is formed.

The term at least one "metal cation" as used in the present invention refers to at least one metal cation being soluble in the acidic preparation, i.e. forming a solution with the acidic preparation.

The term "soluble" in the meaning of the present invention refers to systems in which no discrete solid particles are observed in the solvent below the maximum solute concentration, i.e. the at least one metal cation forms a solution with the water phase of the acidic preparation, wherein the particles of the at least one metal cation are dissolved in the water phase.

A "suspension" or "slurry" in the meaning of the present invention comprises (insoluble) undissolved and/or insoluble solids and water and optionally further additives and usually may contain large amounts of solids and, thus, can be more viscous and generally of higher density than the liquid from which it is formed.

The term "solution" in the meaning of the present invention refers to a system comprising aqueous solvent in which no discrete solid particles are observed in the aqueous solvent.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

According to another aspect of the present invention, the use of an aqueous slurry of at least one calcium carbonate source for the selective precipitation of at least one conjugate base and/or at least one metal cation from an acidic preparation by neutralization as defined by claim 1 is provided, wherein the at least one calcium carbonate source has a weight median particle size *d*₅₀ from 0.1 to 500.0 µm. It is preferred that the aqueous slurry of at least one calcium carbonate source a) has solids content of from 0.01 to 50.0 wt.-%, preferably from 0.1 to 40.0 wt.-% and most preferably from 0.2 to 30.0 wt.-%, based on the total weight of the aqueous slurry, and/or b) has a pH value from 3.0 to 9.0 and preferably from 5.0 to 8.0. It is further preferred that the at least one calcium carbonate source a) is a natural ground calcium carbonate and/or precipitated calcium carbonate and/or surface-modified calcium carbonate, preferably natural ground calcium carbonate, and/or b) has a weight median particle size *d*₅₀ from 0.1 to 150.0 µm, preferably from 0.1 to 100.0 µm and more preferably from 0.5 to 60.0 µm, and/or c) contains calcium carbonate in an amount of ≥ 90.0 wt.-%, preferably ≥ 95.0 wt.-%and most preferably from 97.0 to 99.9 wt.-%, based on the total weight of the at least one calcium carbonate source.

When, in the following, reference is made to preferred embodiments or technical details of the inventive process, it is to be understood that these preferred embodiments or technical details also refer to the inventive use of the aqueous slurry of at least one calcium carbonate source for the selective precipitation of at least one conjugate base and/or at least one metal cation from an acidic preparation by neutralization as defined herein and vice versa (as far as applicable). If, for example, it is set out that the aqueous slurry of at least one calcium carbonate source has solids content of from 0.01 to 50.0 wt.-% also the aqueous slurry of the inventive use has solids content of from 0.01 to 50.0 wt.-%.

According to one embodiment of the inventive process, the at least one calcium carbonate source of process step a) is a natural ground calcium carbonate and/or precipitated calcium carbonate and/or surface-modified calcium carbonate, preferably natural ground calcium carbonate.

According to another embodiment of the inventive process, the source of natural ground calcium carbonate (GCC) is selected from marble, chalk, dolomite, limestone and mixtures thereof and/or the precipitated calcium carbonate (PCC) is selected from one or more of the aragonitic, vateritic and calcitic mineralogical crystal forms.

According to another embodiment of the inventive process, the at least one calcium carbonate source a) has a weight median particle size *d*₅₀ from 0.1 to 150.0 µm preferably from 0.1 to 100.0 µm and more preferably from 0.5 to 60.0 µm, and/or b) contains calcium carbonate in an amount of ≥ 90.0 wt.-%, preferably ≥ 95.0 wt.-%, and most preferably from 97.0 to 99.9 wt.-%, based on the total weight of the at least one calcium carbonate source.

According to yet another embodiment of the inventive process, the acidic preparation of process step c) is selected from industrial waste water, urban waste water, waste water or process water from breweries or other beverage industries, waste water or process water in the paper industry, battery industry or battery recycling industry, colour, paints or coatings industries, galvanizing industry, mining industry, agricultural waste water, leather industry waste water and leather tanning industry, and/or has a pH value being below the pH value of the aqueous slurry obtained in process step d), preferably from -1.0 to 7.0, more preferably from 0.0 to 5.0, and most preferably from 0.2 to 3.0.

According to one embodiment of the inventive process, the aqueous slurry obtained in process step d) has solids content of from 0.01 to 50.0 wt.-%, preferably from 0.1 to 40.0 wt.-% and most preferably from 0.2 to 30.0 wt.-%, based on the total weight of the aqueous slurry, and/or has a pH value from 3.0 to 9.0 and preferably from 5.0 to 8.0.

According to another embodiment of the inventive process, contacting step e) is carried out such that the obtained reaction mixture has a pH value being higher than the pH value of the acidic preparation of step c).

According to yet another embodiment of the inventive process, process step d) and step e) are carried out in separate but successive reactors.

According to one embodiment of the inventive process, the process further comprises process step f) of stepwise increasing the pH value of the supernatant of the reaction mixture obtained in process step e), preferably by adding the aqueous slurry obtained in process step d) and/or at least one water soluble base such as sodium hydroxide, potassium hydroxide, calcium hydroxide and the like in form of an aqueous solution or slurry, and/or at least one reactive component, such as a flocculent, coagulent and the like, suitable for precipitating a further at least one conjugate base and/or at least one metal cation from the supernatant of the reaction mixture as water insoluble salt/salts. It is preferred that process step e) and process step f) are carried out in separate but successive reactors, like three separate and successive reactors, preferably process step e) is carried out in a separate first reactor and in an optional separate but successive second reactor and process step f) is carried out in each separate but successive reactor following the separate first reactor or, if present, the optional separate but successive second reactor. It is further preferred that the pH in the separate first reactor and in the optional separate but successive second reactor is adjusted to a pH value being higher than the pH value of the acidic preparation of process step c) and the pH in each separate but successive reactor following the separate first reactor or, if present, the separate but successive second reactor is adjusted to a pH value being higher than the pH value of the reaction mixture in a previous reactor.

According to the inventive process, contacting step d) is carried out in that the pH value of the aqueous solution provided in process step b) is adjusted to a targeted pH by a) the addition of the at least one calcium carbonate source provided in process step a), and/or b) the addition of the supernatant of the reaction mixture obtained in process step e) and/or process step f) if present. According to yet another embodiment of the inventive process, the process further comprises process step g) of separating the water insoluble salt/salts of the at least one conjugate base and/or the at least one metal cation from the reaction mixture obtained in step e) and/or step f).

According to the inventive process, the process is a continuous process, in which the aqueous solution obtained after separating the water insoluble salt/salts of the at least one conjugate base and/or the at least one metal cation from the reaction mixture is used as the aqueous solution of process step b).

As set out above, the inventive process for the selective precipitation of at least one conjugate base and/or at least one metal cation from an acidic preparation by neutralization comprises the steps a), b), c), d) and e). In the following, it is referred to further details of the present invention and especially the foregoing steps of the inventive process for the selective precipitation of at least one conjugate base and/or at least one metal cation from an acidic preparation by neutralization. Those skilled in the art will understand that many embodiments described herein can be combined or applied together.

### Characterization of step a): provision of at least one calcium carbonate source

According to step a) of the process of the present invention, at least one calcium carbonate source is provided having a weight median particle size *d*₅₀ from 0.1 to 500.0 µm. Furthermore, the at least one calcium carbonate source is provided in form of a powder or an aqueous slurry.

The term "at least one" calcium carbonate source in the meaning of the present invention means that the calcium carbonate source comprises, preferably consists of, one or more calcium carbonate sources.

In one embodiment of the present invention, the at least one calcium carbonate source comprises, preferably consists of, one calcium carbonate source. Alternatively, the at least one calcium carbonate source comprises, preferably consists of, two or more calcium carbonate sources. For example, the at least one calcium carbonate source comprises, preferably consists of, two or three calcium carbonate sources.

The term at least one "calcium carbonate source" in the meaning of the present invention refers to a compound that comprises calcium carbonate.

The at least one calcium carbonate source in the meaning of the present invention refers to a material being selected from among natural ground calcium carbonate (GCC or NGCC), a precipitated calcium carbonate (PCC), surface-modified calcium carbonate and mixtures thereof.

GCC is understood to be a naturally occurring form of calcium carbonate, mined from sedimentary rocks such as limestone or chalk, or from metamorphic marble rocks and processed through a treatment such as grinding, screening and/or fractionizing in wet and/or dry form, for example by a cyclone or classifier. In one embodiment of the present invention, the GCC is selected from the group comprising marble, chalk, dolomite, limestone and mixtures thereof.

By contrast, calcium carbonate of the PCC type include synthetic calcium carbonate products obtained by carbonation of a slurry of calcium hydroxide, commonly referred to in the art as a slurry of lime or milk of lime when derived from finely divided calcium oxide particles in water or by precipitation out of an ionic salt solution. PCC may be rhombohedral and/or scalenohedral and/or aragonitic; preferred synthetic calcium carbonate or precipitated calcium carbonate comprising aragonitic, vateritic or calcitic mineralogical crystal forms or mixtures thereof.

"Surface-modified calcium carbonate" (MCC) in the meaning of the present invention may feature a natural ground or precipitated calcium carbonate with an internal structure modification or a surface-reaction product. According to a preferred embodiment of the present invention, the surface-modified calcium carbonate is a surface-reacted calcium carbonate.

For example, the at least one calcium carbonate source of step a) is preferably natural ground calcium carbonate (GCC). More preferably, the at least one calcium carbonate source of step a) is GCC being selected from the group comprising marble, chalk, dolomite, limestone and mixtures thereof.

In general, the at least one calcium carbonate source provided in step a) comprises calcium carbonate in an amount of ≥ 50.0 wt.-%, based on the total weight of the at least one calcium carbonate source.

In one embodiment of the present invention, the at least one calcium carbonate source of step a) comprises calcium carbonate in an amount of ≥ 90.0 wt.-%, based on the total weight of the at least one calcium carbonate source. For example, the at least one calcium carbonate source of step a) comprises calcium carbonate in an amount of ≥ 95.0 wt.-%, based on the total weight of the at least one calcium carbonate source. Preferably, the at least one calcium carbonate source of step a) comprises calcium carbonate in an amount from 97.0 to 99.9 wt.-%, based on the total weight of the at least one calcium carbonate source.

It is one requirement of the present invention that the at least one calcium carbonate source of step a) is a micronized calcium carbonate source. It is thus appreciated that the at least one calcium carbonate source of step a) has a weight median particle size *d*₅₀ from 0.1 to 500.0 µm, as measured by Sedigraph 5100 or by Malvern Mastersizer 2000 using the Fraunhofer light scattering model.

According to one embodiment of the present invention, the at least one calcium carbonate source of step a) has a weight median particle size *d*₅₀ from 0.1 to 150.0 µm, preferably from 0.1 to 100.0 µm and more preferably from 0.5 to 60.0 µm, as measured by Sedigraph 5100. Most preferably, the at least one calcium carbonate source of step a) has a weight median particle size *d*₅₀ from 5.0 to 40.0 µm, as measured by Sedigraph 5100 or by Malvern Mastersizer 2000.

Throughout the present document, the "particle size" of the at least one calcium carbonate source is described by its distribution of particle sizes. The value *dₓ* represents the diameter relative to which x % by weight of the particles have diameters less than *dₓ*. This means that the *d*₂₀ value is the particle size at which 20.0 wt.-% of all particles are smaller, and the *d*₇₅ value is the particle size at which 75.0 wt.-% of all particles are smaller. The *d*₅₀ value is thus the weight median particle size, i.e. 50.0 wt.-% of all grains are bigger or smaller than this particle size. For the purpose of the present invention the particle size is specified as weight median particle size *d*₅₀ unless indicated otherwise. For determining the weight median particle size *d*₅₀ value for particles having a *d*₅₀ value between 0.1 and 500.0 µm, a Sedigraph 5100 device from the company Micromeritics, USA, or a Mastersizer 2000 device from the company Malvern Instruments Ltd, United Kingdom, can be used, using the Fraunhofer light scattering model.

It is appreciated that the at least one calcium carbonate source of the present invention, preferably selected from among natural ground calcium carbonate (GCC or NGCC), a precipitated calcium carbonate (PCC), surface-modified calcium carbonate and mixtures thereof, can be provided in the form of a powder.

Alternatively, the at least one calcium carbonate source of the present invention, preferably selected from among natural ground calcium carbonate (GCC or NGCC), a precipitated calcium carbonate (PCC), surface-modified calcium carbonate and mixtures thereof, can be provided in the form of an aqueous slurry.

If the at least one calcium carbonate source is provided as an aqueous slurry, the aqueous slurry preferably has solids content of from 0.1 to 75.0 wt.-%, based on the total weight of the aqueous slurry. For example, the aqueous slurry of the at least one calcium carbonate source provided in process step a) has solids content of 1.0 to 60.0 wt.-% and most preferably from 5.0 to 50.0 wt.-%, based on the total weight of the aqueous slurry.

Preferably, the at least one calcium carbonate source of the present invention, preferably selected from among natural ground calcium carbonate (GCC or NGCC), a precipitated calcium carbonate (PCC), surface-modified calcium carbonate and mixtures thereof, is provided in the form of a powder.

### Characterization of step b): provision of an aqueous solution

According to process step b) of the process of the present invention, an aqueous solution is provided. It is appreciated that the aqueous solution has a pH value from 0.0 to 7.0.

It is appreciated that the aqueous solution provided in process step b) of the instant process can be any aqueous solution that has a pH value from 0.0 to 7.0.

The term "aqueous" solution refers to a system, wherein the liquid phase comprises, preferably consists of, water. However, said term does not exclude that the aqueous solution comprises minor amounts of at least one water-miscible organic solvent selected from the group comprising methanol, ethanol, acetone, acetonitrile, tetrahydrofuran and mixtures thereof. If the aqueous solution comprises at least one water-miscible organic solvent, the aqueous solution comprises the at least one water-miscible organic solvent in an amount of from 1.0 to 40.0 wt.-% preferably from 1.0 to 30.0 wt.-% and most preferably from 1.0 to 25.0 wt.-%, based on the total weight of the aqueous solution. For example, the aqueous solution consists of water. If the aqueous solution consists of water, the water to be used can be any water available such as tap water and/or deionised water and/or rain water. According to the present invention, the aqueous solution provided in step b) is the aqueous solution obtained by the instant process, i.e. after separating the water insoluble salt/salts of the at least one conjugate base and/or the at least one metal cation from the reaction mixture, e.g. obtained after process step g).

If the aqueous solution provided in step b) is the aqueous solution obtained by the instant process, i.e. after separating the water insoluble salt/salts of the at least one conjugate base and/or the at least one metal cation from the reaction mixture, the aqueous slurry may still comprise trace amounts of the at least one conjugate base and/or the at least one metal cation. For example, if the aqueous solution provided in process step b) is the aqueous solution obtained by the instant process, i.e. after process step g), the amount of the at least one conjugate base and/or the at least one metal cation in the aqueous solution is ≤ 15.0 wt.-%, preferably ≤ 10.0 wt.-% and most preferably ≤ 5.0 wt.-%, e.g. < 3.0 wt.-% or ≤ 1.0 wt.-%, based on the total weight of the aqueous solution.

### Characterization of step c): provision of an acidic preparation

According to step c) of the process of the present invention, an acidic preparation is provided. It is appreciated that the acidic preparation comprises at least one conjugate base and/or at least one metal cation.

It is appreciated that the acidic preparation provided in step c) of the instant process can be any acidic preparation that requires neutralization and/or the removal of at least one conjugate base and/or metal cation.

Accordingly, the acidic preparation comprises at least one conjugate base and/or at least one metal cation.

The term "at least one conjugate base" in the meaning of the present invention means that the acidic preparation comprises one or more kinds of conjugate bases.

In one embodiment of the present invention, the acidic preparation comprises one kind of conjugate bases. Alternatively, the acidic preparation comprises two or more kinds of conjugate bases. For example, the acidic preparation comprises two or three kinds of conjugate bases. Preferably, the acidic preparation comprises one kind of conjugate base.

The at least one conjugate base preferably derives from an acid having a pKₐ value of ≤ 15, preferably, from 15 to -10, more preferably from 10 to -10 and most preferably from 5 to -10.

For example, the at least one conjugate base is selected from at least one monovalent conjugate base, at least one divalent conjugate base, at least one trivalent conjugate base and mixtures thereof.

The term "at least one monovalent conjugate base" in the meaning of the present invention means that the at least one monovalent conjugate base comprises one or more kinds of monovalent conjugate bases.

In one embodiment of the present invention, the at least one monovalent conjugate base comprises, preferably consists of, one kind of monovalent conjugate bases. Alternatively, the at least one monovalent conjugate base comprises, preferably consists of, two or more kinds of monovalent conjugate bases. For example, the at least one monovalent conjugate base comprises, preferably consists of, two or three kinds of monovalent conjugate bases. Preferably, the at least one monovalent conjugate base comprises, preferably consists of, one kind of monovalent conjugate bases.

For example, the at least one monovalent conjugate base is selected from HS⁻, HCO₃⁻, CN⁻, CH₃COO⁻, HCOO⁻, F⁻, Cl⁻, I⁻, H₂PO₄⁻, NO₂⁻, NO₃⁻, HSO₄⁻, ClO₄⁻ and mixtures thereof.

The term "at least one divalent conjugate base" in the meaning of the present invention means that the at least one divalent conjugate base comprises one or more kinds of divalent conjugate bases.

In one embodiment of the present invention, the at least one divalent conjugate base comprises, preferably consists of, one kind of divalent conjugate bases. Alternatively, the at least one divalent conjugate base comprises, preferably consists of, two or more kinds of divalent conjugate bases. For example, the at least one divalent conjugate base comprises, preferably consists of, two or three kinds of divalent conjugate bases. Preferably, the at least one divalent conjugate base comprises, preferably consists of, one kind of divalent conjugate bases.

For example, the at least one divalent conjugate base is selected from S²⁻, CO₃²⁻, HPO₄²⁻, SO₄²⁻ and mixtures thereof.

The term "at least one trivalent conjugate base" in the meaning of the present invention means that the at least one trivalent conjugate base comprises one or more kinds of trivalent conjugate bases.

In one embodiment of the present invention, the at least one trivalent conjugate base comprises, preferably consists of, one kind of trivalent conjugate bases. Alternatively, the at least one trivalent conjugate base comprises, preferably consists of, two or more kinds of trivalent conjugate bases. For example, the at least one trivalent conjugate base comprises, preferably consists of, two or three kinds of trivalent conjugate bases. Preferably, the at least one trivalent conjugate base comprises, preferably consists of, one kind of trivalent conjugate bases.

For example, the at least one trivalent conjugate base is PO₄³⁻.

In one embodiment of the present invention, the acidic preparation comprises only one kind of conjugate bases, i.e. one kind of monovalent conjugate bases or one kind of divalent conjugate bases or one kind of trivalent conjugate bases.

Alternatively, the acidic preparation can comprise a mixture of at least one monovalent conjugate base and/or at least one divalent conjugate base and/or at least one trivalent conjugate base. Preferably, the acidic preparation comprises a mixture of at least one monovalent conjugate base and at least one divalent conjugate base and at least one trivalent conjugate base.

Additionally, the acidic preparation can comprise at least one metal cation.

The term "at least one metal cation" in the meaning of the present invention means that the acidic preparation comprises one or more kinds of metal cations.

In one embodiment of the present invention, the acidic preparation comprises one kind of metal cations. Alternatively, the acidic preparation comprises two or more kinds of metal cations. For example, the acidic preparation comprises two or three kinds of metal cations. Preferably, the acidic preparation comprises one kind of metal cations.

It is appreciated that the at least one metal cation can be any cation forming stable salt, i.e. a salt that can be precipitated as such.

For example, the at least one metal cation is selected from Ti⁴⁺, Fe²⁺, Fe³⁺, Mn²⁺, Mg²⁺, Ba²⁺, Cr²⁺, Cr³⁺, Cr⁶⁺, Zn²⁺, Cu⁺, Cu²⁺, Ni²⁺, Zn²⁺, Al³⁺, Ag⁺, Pb²⁺, Cd²⁺, Co²⁺ and mixtures thereof.

In one embodiment of the present invention, the acidic preparation comprises one kind of metal cations. Alternatively, the acidic preparation can comprise a mixture of metal cations.

The acidic preparation is preferably an aqueous acidic preparation. In other words, the acidic preparation preferably comprises water. However, it is not excluded that the acidic preparation comprises minor amounts of at least one water-miscible organic solvent. For example, the at least one water-miscible organic solvent is preferably selected from methanol, ethanol, acetone, acetonitrile, tetrahydrofuran and mixtures thereof. If the acidic preparation comprises at least one water-miscible organic solvent, the acidic preparation comprises the water-miscible organic solvent in an amount of from 0.01 to 40.0 wt.-% preferably from 1.0 to 30.0 wt.-% and most preferably from 1.0 to 25.0 wt.-%, based on the total weight of the acidic preparation.

It is thus appreciated that the acidic preparation is preferably an aqueous acidic solution, i.e. the preparation comprises an aqueous solvent in which only minor amounts of discrete solid particles are observed in the aqueous solvent.

Thus, the at least one conjugate base and/or at least one metal cation is/are preferably at least one water-soluble conjugate base and/or at least one water-soluble metal cation. However, it is not excluded that the acidic preparation comprises minor amounts of the at least one conjugate base and/or the at least one metal cation as water insoluble salt/salts. For example, if the acidic preparation comprises minor amounts of water insoluble salt/salts of the at least one conjugate base and/or the at least one metal cation, the amount of the water insoluble salt/salts in the acidic preparation is ≤ 5.0 wt.-%, preferably ≤ 3.0 wt.-% and most preferably ≤ 1.0 wt.-%, based on the total weight of the acidic preparation. In one embodiment of the present invention, the acidic preparation of process step c) is free of water insoluble salt/salts of at least one conjugate base and/or at least one metal cation.

It is to be noted that the acidic preparation may vary in composition, i.e. the at least one conjugate base and/or the at least one metal cation to be precipitated from the acidic preparation as water insoluble salt/salts, and thus the pH of the acidic preparation may also vary in a broad range.

However, the acidic preparation typically has a pH value from -1.0 to 7. Preferably, the acidic preparation has a pH value from 0.0 to 5.0, and most preferably from 0.2 to 3.0.

Thus, the acidic preparation can be any acidic preparation obtained as wastewater or process water from the industry.

For example, the acidic preparation of step c) is selected from the group comprising, preferably consisting of, industrial waste water, urban waste water, waste water or process water from breweries or other beverage industries, waste water or process water in the paper industry, battery industry or battery recycling industry, colour, paints or coatings industries, galvanizing industry, mining industry, agricultural waste water, leather industry waste water and leather tanning industry.

### Characterization of step d): contacting the aqueous solution with the at least one calcium carbonate source

According to step d) of the process of the present invention, the aqueous solution of step b) is contacted with the at least one calcium carbonate source of step a) for obtaining an aqueous slurry in which at least a part of the at least one calcium carbonate source is dissolved in the water phase of the aqueous slurry as calcium hydrogen carbonate.

In general, the aqueous solution of step b) and the at least one calcium carbonate source of step a) can be brought into contact by any conventional means known to the skilled person.

It is appreciated that contacting step d) is preferably carried out by adding the at least one calcium carbonate source of step a) to the aqueous solution of step b).

In one embodiment of the present invention, the step of contacting the aqueous solution of step b) with the at least one calcium carbonate source of step a) is carried out in that the at least one calcium carbonate source is added to the aqueous solution under mixing. A sufficient mixing may be achieved by the flow of the at least one calcium carbonate source into the aqueous solution or by agitation, which may provide a more thorough mixing. In one embodiment of the present invention, contacting step d) is carried out under agitation to ensure a thorough mixing of the at least one calcium carbonate source and the aqueous solution. Such agitation can be carried out continuously or discontinuously.

According to the present invention, the aqueous solution of step b) is contacted with the at least one calcium carbonate source of step a) such that an aqueous slurry is obtained.

Thus, it is preferred that the aqueous slurry obtained in process step d) has solids content of from 0.01 to 50.0 wt.-%, based on the total weight of the aqueous slurry. For example, the aqueous slurry obtained in process step d) has solids content of 0.1 to 40.0 wt.-% and most preferably from 0.2 to 30.0 wt.-%, based on the total weight of the aqueous slurry.

If the at least one calcium carbonate source is provided as an aqueous slurry in process step a), the aqueous slurry provided in step a) thus has higher solids content than the aqueous slurry obtained in process step d). That is to say, the aqueous slurry provided in step a) is further diluted with the aqueous solution of step b) to the targeted solids content, i.e. to solids content of from 0.01 to 50.0 wt.-%, preferably from 0.1 to 40.0 wt.-% and most preferably from 0.2 to 30.0 wt.-%, based on the total weight of the aqueous slurry obtained in step d).

It is appreciated that the acidic preparation provided in step c) is neutralized by using the aqueous slurry obtained in step d) in process step e). Thus, it is one requirement of the present process that the aqueous slurry obtained in process step d) has a pH value being higher than the pH value of the acidic preparation provided in step c).

For example, the aqueous slurry obtained in process step d) has a pH value being about neutral. Preferably, the aqueous slurry obtained in process step d) has a pH value from 3.0 to 9.0 and more preferably from 5.0 to 8.0.

The pH of the aqueous slurry obtained in process step d) is adjusted to a targeted pH.

The term "adjusted to a targeted pH" refers to the adjustment of the pH value to a specific pH value required for precipitating the desired at least one conjugate base and/or at least one metal cation.

Accordingly, it is preferred that the pH value of the aqueous slurry obtained in process step d) is adjusted to a pH value depending on the at least one conjugate base and/or at least one metal cation present in the acidic preparation.

Thus, it is preferred that contacting step d) is carried out in that the pH value of the aqueous solution provided in step b) is adjusted to a targeted pH by the addition of the at least one calcium carbonate source of step a).

Additionally or alternatively, contacting step d) is carried out in that the pH value of the aqueous solution provided in step b) is adjusted to a targeted pH by the addition of the supernatant of the reaction mixture obtained in process step e) and/or optional process step f).

It is appreciated that the term "supernatant" refers to the aqueous liquid phase of the reaction mixture and thus forming a solution. The aqueous liquid phase of the reaction mixture is obtained by separating the water insoluble salt/salts of the at least one conjugate base and/or the at least one metal cation from the reaction mixture obtained in process step e) and/or optional process step f).

Additionally or alternatively, contacting step d) is carried out in that the pH value of the aqueous solution provided in step b) is adjusted to a targeted pH by the addition of the supernatant obtained in process step g).

For example, contacting step d) is carried out in that the pH value of the aqueous solution provided in step b) is adjusted to a targeted pH by the addition of the at least one calcium carbonate source of process step a) to the supernatant of the reaction mixture obtained in process step e) or process step f). Alternatively, contacting step d) is carried out in that the pH value of the aqueous solution provided in step b) is adjusted to a targeted pH by the addition of the at least one calcium carbonate source of process step a) to the supernatant of the reaction mixture obtained in process step e) and process step f).

Preferably, contacting step d) is carried out in that the pH value of the aqueous solution provided in step b) is adjusted to a targeted pH by the addition the at least one calcium carbonate source of process step a) to the supernatant of the reaction mixture obtained in step g).

According to the present process, an aqueous slurry is obtained in contacting step d) in which at least a part of the at least one calcium carbonate source is dissolved in the water phase of the aqueous slurry as calcium hydrogen carbonate.

The amount of calcium hydrogen carbonate dissolved in the water phase of the aqueous slurry can be adjusted to the respective needs by the pH of the aqueous solution provided in step b).

It is preferred that the amount of calcium hydrogen carbonate dissolved in the water phase of the aqueous slurry is such that the total amount of hydrogen carbonate ions is as high as possible. For example, it is preferred that at least 100 mg/L as CaCO₃ equivalent, more preferably 200 mg/L as CaCO₃ equivalent, even more preferably 500 mg/l as CaCO₃ equivalent and most preferably 1 000 mg/L as CaCO₃ equivalent of the at least one calcium carbonate source is dissolved in the water phase of the aqueous slurry.

In one embodiment of the present invention, it is preferred that at least 100 mg/L as CaCO3 equivalent, more preferably 200 mg/L as CaCO₃ equivalent, even more preferably 500 mg/L as CaCO₃ equivalent and most preferably 1 000 mg/L as CaCO₃ equivalent of the calcium hydrogen carbonate in the at least one calcium carbonate source is dissolved in the water phase of the aqueous slurry.

### Characterization of step e): contacting the acidic preparation with the aqueous slurry

According to step e) of the process of the present invention, the acidic preparation of step c) is contacted with the aqueous slurry obtained in step d) for adjusting the pH of the resulting reaction mixture. It is one requirement of the present invention that the pH value of the resulting reaction mixture is adjusted to a pH value being higher than the pH value of the acidic preparation of process step c) for precipitating the at least one conjugate base and/or the at least one metal cation from the acidic preparation as water insoluble salt/salts.

It is appreciated that such pH adjustment is required for precipitating the at least one conjugate base and/or the at least one metal cation from the acidic preparation provided in step c).

Thus, contacting step e) is preferably carried out such that the reaction mixture obtained in step e) has a pH value being higher than the pH value of the acidic preparation of step c). It is appreciated that the targeted pH value of the reaction mixture obtained in step e) depends on the composition of the acidic preparation provided in step c), i.e. the at least one conjugate base and/or the at least one metal cation to be precipitated from the acidic preparation as water insoluble salt/salts.

For example, the reaction mixture obtained in step e) has a pH of a pH value of at least 1, preferably of at least 2 and most preferably of at least 3, higher than the pH value of the acidic preparation of step c).

The aqueous slurry obtained in step d) and the acidic preparation provided in step c) can be brought into contact by any conventional means known to the skilled person.

It is appreciated that contacting step e) is preferably carried out by adding the aqueous slurry obtained in step d) to the acidic preparation provided in step c). For example, the aqueous slurry is preferably added into the acidic preparation by mixing. A sufficient mixing may be achieved by the flow of the aqueous slurry into the acidic preparation or by agitation, which may provide a more thorough mixing. In one embodiment of the present invention, contacting step e) is carried out under agitation to ensure a thorough mixing of the aqueous slurry and the acidic preparation. Such agitation can be carried out continuously or discontinuously.

In order to ensure a suitable adjustment of the pH for the aqueous slurry obtained in step d) and of the reaction mixture of step e), process steps d) and e) are preferably carried out separately, such as in separate reactors.

In one embodiment of the present invention, process step d) and step e) are carried out in separate but successive reactors.

The term "successive" in the meaning of the present invention refers to the subsequent position of the reactor in which process step e) is carried out after another reactor in which process step d) is carried out. That is to say, at least two reactors are connected in series.

Reactors which can be configured such that they are separate but successive are well known to the skilled person. For example, such separate but successive reactors can be any reactor which can be connected to another reactor by e.g. a pipe and optionally fitted with valves and pumps for controlling the flow of liquid between the reactors.

Accordingly, process step e) is carried out after process step d).

In one embodiment of the present invention, process step d) and step e) are carried out in separate but successive reactors that can be configured in continuous or batch mode.

It is appreciated that process step d) and step e) are preferably carried out in at least two separate and successive reactors, more preferably two or three, most preferably two, separate and successive reactors, which are connected in series.

For example, process step d) and process step e) are carried out in two separate and successive reactors. Preferably process step d) is carried out in a separate first reactor and process step f) is carried out in a separate but successive second reactor.

Alternatively, process step d) and process step e) are carried out in three separate and successive reactors. Preferably process step d) is carried out in a separate first reactor and process step f) is carried out in a separate but successive second reactor and in a separate but successive third reactor.

It is appreciated that by adjusting the pH of the reaction mixture according to step e) of the instant process, the at least one conjugate base and/or the at least one metal cation present in the acidic preparation of step c) is/are precipitated as water insoluble salt/salts.

The term "water insoluble" in the meaning of the present invention refers to systems in which discrete solid particles are observed in the solvent, i.e. the precipitated water insoluble salt/salts forms/form a suspension with water, wherein the particles of the precipitated water insoluble salt/salts is/are dispersed in the water.

It is appreciated that the amount of aqueous slurry in which at least a part of the at least one calcium carbonate source is dissolved in the water phase of the aqueous slurry as calcium hydrogen carbonate added in process step e) is preferably such that the calcium carbonate dissolved in the aqueous phase as calcium hydrogen carbonate of the aqueous slurry is present in a ratio sufficient for reacting the at least one conjugate base and/or at least one metal cation from the acidic preparation as water insoluble salt/salts.

The complete precipitation of the water insoluble salt/salts can be controlled by conductivity and pH measurements.

According to the instant process, the process allows the selective precipitation of at least one conjugate base and/or at least one metal cation from the acidic preparation.

If the acidic preparation provided in step c) comprises a mixture of at least one conjugate base and at least one metal cation or a mixture of more than one kind of conjugate bases or metal cations, various water insoluble salts may be obtained. Such various water insoluble salts may have different pH solubilities and, thus, for precipitating the various water insoluble salts different pHs have to be employed.

Thus, if the acidic preparation provided in step c) comprises a mixture of at least one conjugate base and at least one metal cation or a mixture of more than one kind of conjugate bases or metal cations, the pH value of the reaction mixture, i.e. the supernatant of the reaction mixture, obtained in step e) can be, after adjusting the pH of the resulting reaction mixture to a pH value being higher than the pH value of the acidic preparation of process step c) for precipitating a first at least one conjugate base and/or the at least one metal cation from the acidic preparation as water insoluble salt/salts, further adjusted to a pH being higher than the pH value adjusted in step e) for precipitating a second or further at least one conjugate base and/or at least one metal cation from the acidic preparation as water insoluble salt/salts.

It is thus appreciated that the process can further comprise process step f) of stepwise increasing the pH value of the supernatant of the reaction mixture obtained in process step e).

The further stepwise increase of the pH value of the supernatant of the reaction mixture obtained in process step e) can be reached in process step f) by further contacting the supernatant of the reaction mixture obtained in process step e) with the aqueous slurry obtained in process step d).

Additionally or alternatively, the further stepwise increase of the pH value of the supernatant of the reaction mixture in process step e) can be reached by further contacting the supernatant of the reaction mixture obtained in process step e) with conventional alkaline component. Such conventional alkaline components comprise e.g. water soluble bases and/or reactive components known to the skilled person.

For example, such further increase of the pH value of the supernatant of the reaction mixture in process step f) can be carried out by adding at least one water soluble base and/or at least one reactive component suitable for precipitating of a further at least one conjugate base and/or at least one metal cation from the supernatant of the reaction mixture as water insoluble salt/salts.

In one embodiment of the present invention, the at least one water soluble base is selected from the group comprising sodium hydroxide, potassium hydroxide, calcium hydroxide and the like. It is appreciated that the at least one water soluble base is in form of an aqueous solution or slurry. Such an aqueous solution or slurry is well known to the skilled person. The at least one reactive component can be selected from flocculent, coagulent and the like.

For example, if the pH of the supernatant of the reaction mixture obtained in process step e) shall be increased to a pH value of up to 10, e.g. for precipitating copper or nickel as water insoluble salt/salts, calcium hydroxide can be added as the at least one water soluble base in the form of an aqueous suspension.

In one embodiment of the present invention, process step f) is repeated one or more times.

If process step f) is repeated one or more times, the further stepwise increase of the pH value of the supernatant of the reaction mixture obtained in step e) can be reached by further contacting the supernatant of the reaction mixture obtained in step e) with the aqueous slurry obtained in process step d) one or more times and/or by contacting the reaction mixture obtained in process step e) with an alkaline component one or more times, i.e. by adding at least one water soluble base and/or at least one reactive component suitable for precipitating of a further at least one conjugate base and/or at least one metal cation from the supernatant of the reaction mixture as water insoluble salt/salts.

For example, the further stepwise increase of the pH value of the supernatant of the reaction mixture obtained in step e) can be reached by further contacting the supernatant of the reaction mixture obtained in step e) with the aqueous slurry obtained in process step d) several times, e.g. until the maximum pH value reachable by CaCO₃ dosing is achieved. It is appreciated that the maximum pH value reachable by CaCO₃ dosing is about 7 to 8.5.

Alternatively, the further stepwise increase of the pH value of the supernatant of the reaction mixture obtained in step e) can be reached by further contacting the supernatant of the reaction mixture obtained in step e) with the aqueous slurry obtained in process step d) one or more times and by contacting the supernatant of the reaction mixture obtained in step e) with an alkaline component once.

As described above for process steps d) and e), also process steps e) and f) are preferably carried out separately, such as in separate reactors.

In one embodiment of the present invention, process step e) and step f) are carried out in separate but successive reactors.

Accordingly, process step f) is carried out after process step e).

It is appreciated that the number of reactors for process step e) and step f) depend on the content of the acidic preparation comprising at least one conjugate base and/or at least one metal cation provided in step c). In particular, it is to be noted that the number of reactors for process step e) and step f) depend on the pH solubility of the water insoluble salts present in the reaction mixture obtained in step e). In other words, if the acidic preparation provided in step c) comprises more than one conjugate base or metal cation or a mixture of at least one conjugate base and/or at least one metal cation forming water insoluble salts that can be precipitated at differing pHs, the number of reactors can be adjusted to each specific pH required for precipitating the water insoluble salts from the reaction mixture.

Thus, if process step f) is implemented in the instant process, process step e) and process step f) are carried out in at least two separate and successive reactors. For example, process step e) and step f) are carried out in at least three or four separate and successive reactors, such as in three separate and successive reactors.

In one embodiment of the present invention, process step e) and process step f) are carried out in three separate and successive reactors.

As process step e) and process step f) are carried out in separate and successive reactors, it is appreciated that process step e) can be carried out in a separate first and separate but successive second reactor. Alternatively, process step e) is carried out in a separate first reactor. Preferably, process step e) is only carried out in a separate first reactor.

Additionally, it is preferred that process step f) is carried out in each separate and successive reactor following the separate first and optional separate but successive second reactor in which process step e) is carried out. In other words, each further stepwise increase of the pH for precipitating of a further at least one conjugate base and/or at least one metal cation from the supernatant of the reaction mixture obtained in step e) as water insoluble salt/salts is carried out in a separate and successive reactor.

For example, process step f) is carried out in one or two separate and successive reactors following the separate first and optional separate but successive second reactor in which process step e) is carried out.

If process step e) and process step f) are carried out in four separate and successive reactors, process step e) is preferably carried out in a separate first reactor and in a separate but successive second reactor and process step f) is carried out in a separate but successive third reactor and in a separate but successive fourth reactor.

Alternatively, if process step e) and process step f) are carried out in three separate and successive reactors, process step e) is preferably carried out in a separate first reactor and process step f) is carried out in a separate but successive second reactor and in a separate but successive third reactor or process step e) is carried out in a separate first reactor and in a separate but successive second reactor and process step f) is carried out in a separate but successive third reactor.

Accordingly, it is appreciated that process step e) is carried out in a separate first reactor and in an optional separate but successive second reactor and process step f) is carried out in each separate but successive reactor following the separate first reactor or, if present, the separate but successive second reactor.

According to the instant process, the pH in the separate first reactor is thus adjusted to a pH value being higher than the pH value of the acidic preparation provided in step c). Additionally, the pH in each separate but successive reactor following the separate first reactor or, if present, the separate but successive second reactor in which process step e) is carried out is stepwise adjusted to a pH value being higher than the pH value of the reaction mixture in the previous reactor, i.e. the pH of the reaction mixture obtained in step e).

For example, if process step e) and step f) are carried out in three separate and successive reactors, the pH in the separate first reactor and the optional separate but successive second reactor is adjusted to a pH value being higher than the pH value of the acidic preparation of step c) and the pH in each separate but successive reactor following the separate first reactor or, if present, the separate but successive second reactor is adjusted to a pH value being higher than the pH value of the reaction mixture in a previous reactor.

If the instant process comprises process step f), it is thus preferred that process step d), process step e) and process step f) are carried out in at least three separate and successive reactors, preferably three to five separate and successive reactors, such as four or five separate and successive reactors.

If process step d), process step e) and optional process step f) are carried out in four separate and successive reactors, it is preferred that process step d) is carried out in a separate first reactor and process step e) is carried out in a separate but successive second reactor and process step f) is carried out in a separate but successive third reactor and in a separate but successive fourth reactor.

If process step d), process step e) and optional process step f) are carried out in five separate and successive reactors, it is preferred that process step d) is carried out in a separate first reactor and process step e) is carried out in a separate but successive second reactor and in a separate but successive third reactor and process step f) is carried out in a separate but successive fourth reactor and in a separate but successive fifth reactor.

It is appreciated that process step f) is performed on the supernatant, i.e. the aqueous solution, obtained by separating the water insoluble salt/salts of the at least one conjugate base and/or the at least one metal cation from the reaction mixture obtained in step e). If process step f) is carried out in more than one separate and successive reactor, each stepwise increase of the pH for precipitating of a further at least one conjugate base and/or at least one metal cation from the reaction mixture as water insoluble salt/salts is performed on the supernatant, i.e. the supernatant of the reaction mixture obtained in the previous reactor.

Thus, the instant process preferably further comprises process step g) of separating the water insoluble salt/salts of the at least one conjugate base and/or the at least one metal cation from the reaction mixture obtained in process step e) and/or process step f).

It is appreciated that process step g) separates the reaction mixture obtained in process step e) and/or process step f) in a solid phase and a liquid aqueous phase, of which the liquid aqueous phase is advantageously used as the aqueous solution provided in process step b).

For example, the instant process further comprises process step g) of separating the water insoluble salt/salts of the at least one conjugate base and/or the at least one metal cation from the reaction mixture obtained in process step e) or process step f). Alternatively, the instant process further comprises process step g) of separating the water insoluble salt/salts of the at least one conjugate base and/or the at least one metal cation from the reaction mixture obtained in step process e) and process step f). The supernatant of the reaction mixture, i.e. the liquid aqueous phase, obtained by separating the water insoluble salt/salts of the at least one conjugate base and/or the at least one metal cation from the reaction mixture obtained in process step e) and/or process step f) is used as the aqueous solution provided in step b). Implementing process step g) is thus preferably advantageous for reducing the water footprint of the process because the preparation of the aqueous slurry in contacting step d) avoids the consumption of additional water in the process.

The separation of the water insoluble salt/salts of the at least one conjugate base and/or the at least one metal cation from the reaction mixture obtained in step e) and/or step f) can be carried out by any separation technique known to the skilled person. For example, such separation can be achieved by centrifugation, filtration, settling, sedimentation and subsequent decantation.

It is appreciated that the present process can be configured as a batch process or continuous process.

For example, the present process can be configured as a continuous process. Preferably, the present process is configured as a continuous process in which the supernatant of the reaction mixture obtained after separating the water insoluble salt/salts of the at least one conjugate base and/or the at least one metal cation from the reaction mixture is used as the aqueous solution of step b).

It is to be noted that the foregoing process has the advantage that a selective removal of conjugate bases and/or metal cations from an acidic preparation is achieved. Furthermore, due to the preparation of an aqueous slurry in which at least a part of the at least one calcium carbonate source is dissolved in the water phase of the aqueous slurry as calcium hydrogen carbonate and the subsequent contacting of the acidic preparation with said aqueous slurry, the process can be carried out under improved or optimized CO₂ footprint. The implementation of further process steps such as process step g) and the use of the obtained supernatant as the aqueous solution of step b) further reduces the water footprint of the process. In addition thereto, the instant process can be carried out without the need of specific equipment.

Due to the good results obtained by using an aqueous slurry in which at least a part of the at least one calcium carbonate source is dissolved in the water phase of the aqueous slurry as calcium hydrogen carbonate in the instant process, the present invention refers in a further aspect to the use of an aqueous slurry of at least one calcium carbonate source for the selective precipitation of at least one conjugate base and/or at least one metal cation from an acidic preparation by neutralization.

The term "aqueous" slurry refers to a system, wherein the liquid phase of the slurry comprises, preferably consists of, water. However, said term does not exclude that the liquid phase of the aqueous slurry comprises minor amounts of at least one water-miscible organic solvent selected from the group comprising methanol, ethanol, acetone, acetonitrile, tetrahydrofuran and mixtures thereof. If the aqueous slurry comprises at least one water-miscible organic solvent, the liquid phase of the aqueous slurry comprises the at least one water-miscible organic solvent in an amount of from 1.0 to 40.0 wt.-% preferably from 1.0 to 30.0 wt.-% and most preferably from 1.0 to 25.0 wt.-%, based on the total weight of the liquid phase of the aqueous slurry. For example, the liquid phase of the aqueous slurry consists of water. If the liquid phase of the aqueous slurry consists of water, the water to be used can be any water available such as tap water and/or deionised water.

It is preferred that the aqueous slurry of at least one calcium carbonate source has solids content of from 0.01 to 50.0 wt.-%, based on the total weight of the aqueous slurry. For example, the aqueous slurry of at least one calcium carbonate source has solids content of 0.1 to 40.0 wt.-% and most preferably from 0.2 to 30.0 wt.-%, based on the total weight of the aqueous slurry.

In one embodiment of the present invention, the aqueous slurry of at least one calcium carbonate source is obtained by contacting an aqueous solution having a pH value from 0.0 to 7.0 with at least one calcium carbonate source. It is thus preferred that the aqueous slurry of at least one calcium carbonate source has a pH value from 3.0 to 9.0 and preferably from 5.0 to 8.0.

It is one requirement that the aqueous slurry comprises at least one calcium carbonate source.

The term "at least one" calcium carbonate source in the meaning of the present invention means that the calcium carbonate source comprises, preferably consists of, one or more calcium carbonate sources.

In one embodiment of the present invention, the at least one calcium carbonate source comprises, preferably consists of, one calcium carbonate source. Alternatively, the at least one calcium carbonate source comprises, preferably consists of, two or more calcium carbonate sources. For example, the at least one calcium carbonate source comprises, preferably consists of, two or three calcium carbonate sources.

The term at least one "calcium carbonate source" in the meaning of the present invention refers to a compound that comprises calcium carbonate.

Preferably, the at least one calcium carbonate source in the meaning of the present invention refers to a material being selected from among natural ground calcium carbonate (GCC or NGCC), a precipitated calcium carbonate (PCC), surface-modified calcium carbonate and mixtures thereof.

If the at least one calcium carbonate source is a GCC, the GCC is preferably selected from the group comprising marble, chalk, dolomite, limestone and mixtures thereof. If the at least one calcium carbonate source is a PCC, the PCC is preferably selected from the aragonitic, vateritic or calcitic mineralogical crystal forms or mixtures thereof.

In one embodiment of the present invention, the at least one calcium carbonate source is a natural ground calcium carbonate (GCC). More preferably, the at least one calcium carbonate source is a GCC being selected from the group comprising marble, chalk, dolomite, limestone and mixtures thereof.

In general, the at least one calcium carbonate source comprises calcium carbonate in an amount of ≥ 50.0 wt.-%, based on the total weight of the at least one calcium carbonate source.

In one embodiment of the present invention, the at least one calcium carbonate source comprises calcium carbonate in an amount of ≥ 90.0 wt.-%, based on the total weight of the at least one calcium carbonate source. For example, the at least one calcium carbonate source comprises calcium carbonate in an amount of ≥
95.0 wt.-%, based on the total weight of the at least one calcium carbonate source. Preferably, the at least one calcium carbonate source comprises calcium carbonate in an amount from 97.0 to 99.9 wt.-%, based on the total weight of the at least one calcium carbonate source.

It is one requirement of the present invention that the at least one calcium carbonate source is a micronized calcium carbonate source. It is thus appreciated that the at least one calcium carbonate source has a weight median particle size *d*₅₀ from 0.1 to 500.0 µm as measured by Sedigraph 5100 or by Malvern Mastersizer 2000.

In one embodiment of the present invention, the at least one calcium carbonate source has a weight median particle size *d*₅₀ from 0.1 to 150.0 µm, preferably from 0.1 to 100.0 µm and more preferably from 0.5 to 60.0 µm, as measured by Sedigraph 5100. Most preferably, the at least one calcium carbonate source of step a) has a weight median particle size *d*₅₀ from 5.0 to 40.0 µm, as measured by Sedigraph 5100 or by Malvern Mastersizer 2000.

It is further appreciated that the aqueous slurry of at least one calcium carbonate source comprises calcium hydrogen carbonate dissolved in the water phase of the aqueous slurry.

It is preferred that the amount of of calcium hydrogen carbonate dissolved in the water phase of the aqueous slurry is such that the total amount of hydrogen carbonate ions is as high as possible. For example, it is preferred that at least 100 mg/L as CaCO₃ equivalent, more preferably 200 mg/L as CaCO₃ equivalent, even more preferably 500 mg/L as CaCO₃ equivalent and most preferably 1 000 mg/L as CaCO₃ equivalent of the at least one calcium carbonate source is dissolved as calcium hydrogen carbonate in the water phase of the aqueous slurry.

In one embodiment of the present invention, it is preferred that at least 100 mg/L as CaCO₃ equivalent, more preferably 200 mg/L as CaCO₃ equivalent, even more preferably 500 mg/L as CaCO₃ equivalent, still more preferably 1 000 mg/L as CaCO₃ equivalent and most preferably 1 000 mg/L as CaCO₃ equivalent of the at least one calcium carbonate source is dissolved as calcium hydrogen carbonate in the water phase of the aqueous slurry.

The following examples may additionally illustrate the invention, but are not meant to restrict the invention to the exemplified embodiments. The examples below show the capability of the process to selectively precipitate at least one conjugate base and/or at least one metal cation from an acidic preparation by neutralization:

### Examples

### Measurement methods

The following measurement methods are used to evaluate the parameters given in the examples and claims.

### BET specific surface area of a material

The BET specific surface area was measured via the BET process according to ISO 9277 using nitrogen.

### Particle size distribution (mass % particles with a diameter < X) and weight median diameter (d₅₀) of a particulate material

Weight median grain diameter and grain diameter mass distribution of a particulate material were determined via the sedimentation process, i.e. an analysis of sedimentation behaviour in a gravitational field, or via laser diffraction, i.e. the particle size is determined by measuring the intensity of light scattered as a laser beam passes through a dispersed particulate sample. The measurement was made with a Sedigraph™ 5100 of Micromeritics Instrument Corporation or a Mastersizer 2000 of Malvern Instruments Ltd, United Kingdom, using the Fraunhofer light scattering model.

The method and the instrument are known to the skilled person and are commonly used to determine grain size of fillers and pigments. The measurement via laser diffraction is carried out in an aqueous solution of 0.1 wt.-% Na₄P₂O₇. The samples are dispersed using a high speed stirrer and supersonics.

### pH measurement

The pH of the aqueous samples can be measured by all types of pH measurement devices ensuring a measuring error of ± 0.05 at a pH between 0 and 2. The pH of the aqueous samples was measured by using a standard pH-meter at approximately 22°C (± 1°C).

### Solids content

The solids content was measured using a Moisture Analyzer of Mettler-Toledo HP43. The method and the instrument are known to the skilled person.

### Conductivity

The conductivity can be measured by all types of conductivity measurement devices ensuring a measuring error of ≤ 5% between pH of 0 and 2. For example, the conductivity can be measured by using a Multimeter WTW 3420 or a Sonde Tetra Con 925.

### Whiteness R457

The whiteness R457 was measured by using a spectrophotometer (Datacolor Elrepho 3000) equipped with Datacolor software in accordance with the ISO 2469 Standard. The measurement was carried out at a standard illumination of D65 and a standard observer of 10°. Furthermore, BaSO₄ for brightness standard DIN 5033 from Merck KGaA, Germany was used for calibration. Calibration was repeated every six hours and checked by measuring a reference sample.

### Example 1

The following example illustrates the selective precipitation of defined conjugate bases and metal cations from an acidic preparation by neutralization by using the process of the instant invention on lab scale basis.

The trials were performed under room temperature, i.e. at a temperature of from 15 to 25 °C and ambient pressure.

6 liters of acidic wastewater from Circuit Printed Boards production (CPB/PCB) with heavy metal contents (assembly of rinsing and acid waters from layout-exposing-etching-registration-contacting-galvanization) was used as acidic preparation.

The following Table 1 summarizes the different calcium carbonate sources and their properties used in the process for selective precipitation of at least one conjugate base and/or at least one metal cation from an acidic preparation by neutralization.

**Table 1: calcium carbonate sources**

| **Samples^{[1]}** | **Calcium carbonate source** | ***d*₅₀ [µm]** | **CaCO₃ [wt.-%]** | **HCl insoluble [wt.-%]** |
|---|---|---|---|---|
| A | Limestone | 3.0 | 99.5 | 0.1 |
| B | Chalk | 2.5 | 99.6 | 0.1 |
| C | Marble | 5.5 | 98.0 | 2.0 |

| | | | | |
|---|---|---|---|---|
| ^{[1]} All calcium carbonate sources used in the present invention are commercially available from Omya International AG, Switzerland. | | | | |

The calcium carbonate sources as outlined in Table 1 were provided in powder form. From the calcium carbonate sources and water aqueous calcium carbonate slurries of differing solids content were prepared.

The solids content and pH of the respective aqueous slurries were adapted to the required needs such as pumpability. For example, an aqueous calcium carbonate slurry of sample C was prepared having solids content of 35.0 wt.-%, based on the total weight of the aqueous slurry, a pH of 8.45 and conductivity of 320 mS/cm.

The dosage of the calcium carbonate slurries (slurry 1 comprising limestone or slurry 2 comprising marble) into the acidic preparation is based on reaction kinetics and thus the acidic wastewater used as acidic preparation was analyzed before carrying out the instant process by IC for anions and ICP-OES for cations. In the acidic wastewater used as acidic preparation, the acid content was basically generated by SO₄²⁻ ions - the composition of the wastewater is shown in Table 2. Further specification data are shown in Table 3.

**Table 2: Composition of wastewater [ppm]**

| Cl⁻ | SO₄²⁻ | PO₄³⁻ | NO₃⁻ | Al | Cu | Fe | Ni | Zn |
|---|---|---|---|---|---|---|---|---|
| 1 100 | 8 100 | 40 | 10 | 1 | 950 | 220 | 3 | 2 |

**Table 3: Specification and quality of wastewater**

| | **pH** | **Solid content [mg/L]** | **Conductivity [mS/cm]** |
|---|---|---|---|
| Acidic wastewater | 0.5 - 1.3 | 0.01 - 0.3 | 30-40 |

The process was carried out in that the respective calcium carbonate slurry (i.e. slurry 1 or slurry 2) was dosed in the acidic preparation under agitation such that the calcium carbonate is present in the respective stoichiometric ratio required for pH neutralization. The precipitation in this example was carried out without the addition of further additives such as flocculants or coagulents.

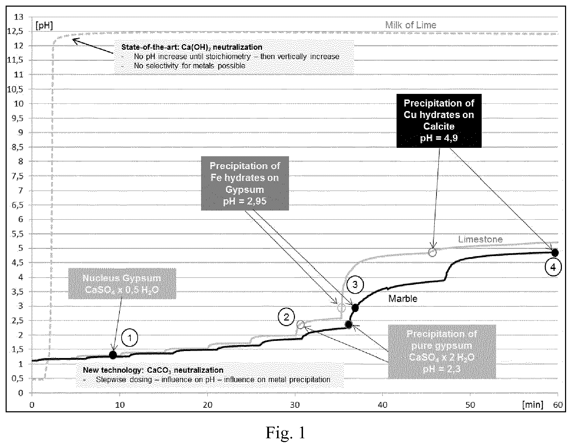

The precipitation was controlled by standard conductivity and pH measurements. Such conductivity measurement is also possible if the original wastewater is not exactly analyzed beforehand. The results of the selective precipitation can be gathered from Fig. 1, showing points of precipitating for e.g. white gypsum (point 2), Fe salts (point 3) and Cu salts (point 4). The light grey curve was obtained by dosing a limestone CaCO₃ slurry, and the dark grey curve was obtained by dosing a marble CaCO₃ slurry.

Precipitation of white gypsum was obtained by dosing 13.29 g/L of CaCO₃ (at pH = 2) in the industrial acid waste as shown in Table 7. Precipitation of iron hydroxides was performed by dosing 1.5 g/L of CaCO3 (at pH = 2.95) on the supernatant obtained after the removal of the white gypsum. Precipitation of copper hydroxides was performed by dosing 11.5 g/L of CaCO3 (at pH = 4.9) on the supernatant obtained after the removal of the iron gypsum. This three-step precipitation was the same for slurry 1 as well as for slurry 2.

Compared to the classical treatment with milk of lime, also shown in Figure 1 (upper broken line), the instant process allows the selective precipitation of conjugate bases as well as metal cations which can thus be reused as raw materials for other applications. The acidic wastewater used as acidic preparation can be declared as raw material for white gypsum production with high degree of whiteness (>80%). In contrast thereto, the precipitate obtained from the classical lime treatment has to be disposed as multivalent waste.

The composition of the precipitates obtained by using slurry 1 (comprising limestone) or slurry 2 (comprising marble) is shown in Table 4. The hydrates of Fe and Cu are embedded in precipitated gypsum and calcite structures.

**Table 4: Composition of precipitates**

| | **Precipitation 2** | **Precipitation 3 Fₑ^{[3]}** | **Precipitation 4 Cu^{[4]}** |
|---|---|---|---|
| | **Gypsum / yield [g/l]** | **Gyps. / Calcite / yield [g/l]** | **Gyps. / Calcite / yield [g/l]** |
| Marble | 100 wt.-% / 8.5 | 85 wt.-% / 15 wt.-% / 3.5 | 45 wt.-% / 55 wt.-% / 2 |
| Limestone | 100 wt.-% / 9.5 | 60 wt.-% / 40 wt.-% / 2 | 20 wt.-% / 80 wt.-% / 0.5 |

| | | | |
|---|---|---|---|
| ^{[3]} Fe content in sludge - 100 wt.-% of origin amount in wastewater ^{[4]} Cu content in sludge - 99.2 wt.-% of origin amount in wastewater. | | | |

With regard to the selective precipitation of the Fe and Cu cations from the liquid phase of the acidic wastewater by using slurry 1 (comprising limestone) in the instant process, the data obtained by conductivity and pH measurements are outlined in Table 5. From the data, it can be gathered that it was possible to discharge 3 charges of water insoluble salts.

**Table 5: Precipitation of Fe and Cu cations**

| **Sample** | **pH** | **Conductivity (mS/cm)** | **Fe (ppm)** | **Cu (ppm)** |
|---|---|---|---|---|
| origin | 1.12 | 35 | 220 | 950 |
| 1 | 1.19 | 32 | 215 | 950 |
| 2 | 1.29 | 30 | 220 | 970 |
| 3 | 1.39 | 24 | 215 | 900 |
| 4 | 1.71 | 17 | 200 | 930 |
| 5 | 2.00 | 14 | 220 | 990 |
| 6 | 2.60 | 11 | 190 | 910 |
| 7 | 3.40 | 9 | 0.09 | 805 |
| 8 | 4.00 | 9 | < 0.01 | 620 |
| 9 | 4.50 | 9 | < 0.01 | 110 |
| 10 | 4.90 | 8 | < 0.01 | 55 |
| 11 | 5.05 | 7.5 | < 0.01 | 40 |
| 12 | 5.23 | 6.8 | < 0.01 | 10 |
| 13 | 5.35 | 6.5 | < 0.01 | |
| 14 | 5.65 | 6 | < 0.01 | 1.8 |
| 15 | 6.00 | 5.6 | < 0.01 | 1.3 |
| 16 | 6.15 | 5.3 | < 0.01 | 0.8 |
| 17 | 6.30 | 4.4 | < 0.01 | 0.5 |

Qualitative precipitation with quantitative amounts of water insoluble salts can be controlled by retention time, dosing sequence of respective agents, temperature and sludge discharging.

Main goal of the instant process is to enrich solids through precipitation. The instant process increases crystal growth and thus allows precipitation. The solid content of the obtained solution after separating the precipitates by centrifuging or settling was about 0. The specific surface area of the precipitated sludge decreases by using the instant process and is from 0.1 to 10.0 m²/g, measured using nitrogen and the BET method. In contrast thereto, the classical milk of lime treatment results in a sludge having a specific surface area of < 20.0 m²/g, measured using nitrogen and the BET method.

### Example 2

The following example illustrates the selective precipitation of at least one conjugate base and/or at least one metal cation from an acidic preparation of unknown composition by neutralization using the process of the instant invention on industrial scale basis.

The trials were performed under room temperature, i.e. at a temperature of from 15 to 25 °C.

An acidic wastewater from Circuit Printed Boards production (CPB/PCB) with heavy metal contents (assembly of rinsing and acid waters from layout-exposing-etching-registration-contacting-galvanizing) was used as acidic preparation.

The test was performed with 1 000 liters of mixed CPB wastewater in batch mode (steps). The exact composition of conjugate bases and metal cations in the wastewater was unknown when delivered. The analysis of the original wastewater was performed before or after the test.

The basic data of the acidic wastewater are shown in Table 6.

**Table 6: Basic data of the acidic wastewater**

| **Step** | **pH** | **El. conductivity (mS/cm)** | **Fe (ppm)** | **Cu (ppm)** | **Ag (ppm)** | **Ni (ppm)** | **Zn (ppm)** | **SO₄²⁻ (ppm)** | **Cl⁻ (ppm)** | **PO₄³⁻ (ppm)** | **NO₃⁻ (ppm)** |
|---|---|---|---|---|---|---|---|---|---|---|---|
| origin | 0.45 | 61.9 | high | high | low | low | low | high | high | low | low |

For neutralization and precipitation, a calcium carbonate slurry comprising marble as described in Table 1 has been prepared. The calcium carbonate slurry had solids content of 50.0 wt.-%, based on the total weight of the slurry.

The process was carried out in that the calcium carbonate slurry was dosed in the acidic preparation under agitation such that the calcium carbonate is present in the respective stoichiometric ratio required for pH neutralization. Each step of dosing was followed by a hold-up time for complete precipitation and subsequent filtration of suspension (clarification by centrifuge and filter press of high solid phase).

The precipitation was carried out stepwise controlling pH, conductivity and character of precipitates. The further selective precipitation was performed by dosing a 2^{nd} agent for further increasing the pH and precipitation of metals with higher pH solubility product such as Ni and Zn. Ca(OH)₂ was used as the 2^{nd} agent. The single dosing steps were carried out as outlined in Table 7.

**Table 7: Dosing steps**

| **Step** | **Dosing agent** | **Dosage solid [g/l]** | **Dosage slurry [ml/l]** | **Comment** |
|---|---|---|---|---|
| origin | - | - | - | Procedure similar to lab trials |
| 1 | Marble | 13.29 | 18.4 | Slurry with 0.5 kg/kg - gypsum |
| 2 | Marble | 1.07 | 1.5 | "red gypsum" |
| 3 | Marble | 15.37 | 21.3 | "blue calcite" |
| 4 | Ca(OH)₂ | 3.5 | 9 | pH up to 10.75 |

The total dosage of marble was 29.73 g/l based on completion of stoichiometric equilibrium, i.e. assuming that 90% of anions contain SO₄²⁻, such that the molar concentration amounted to 0.35 mol/l of H⁺, which corresponds to a total dosage of 66.8 g/l marble for neutralization.

Thus, the total amount of marble was 45.0 wt.-%, based on the total dosage of marble. This was confirmed as pH did not change anymore. Furthermore, the dosing time for the Cu precipitation was 40 min, starting from the addition of the calcium carbonate slurry, and the Cu precipitation was completed after 40 min of reaction time.

The solids content of the resulting acidic wastewater, obtained after each precipitation step of the respective high solid phases, after centrifugation (by using the centrifuge Alfa Laval Clara 20 of Alfa Laval, Sweden) and of the respective filtercakes was measured. The filtercakes were obtained by using a mobile batch pressure filterpress of 10 liters capacity of Clear Creek Systems, USA, at a maximum pressure of 7 bars. The obtained filtrates and original acidic wastewater were examined for anions and cations. The data are summarized in Tables 8 and 9.

**Table 8: Analysis of the original wastewater and filtrates**

| **Step** | **pH** | **El**. **conductivity (mS/cm)** | **Fe (ppm)** | **Cu (ppm)** | **Ag (ppm)** | **Ni (ppm)** | **Zn (ppm)** | **SO₄²⁻ (ppm)** | **Cl⁻ (ppm)** | **PO₄³⁻ (ppm)** | **NO₃⁻ (ppm)** |
|---|---|---|---|---|---|---|---|---|---|---|---|
| origi n | 0.45 | 61.91 | 230 | 1 090 | 0.24 | 7.4 | 0.6 | 16 900 | 950 | 30 | 15 |
| 1 | 2.65 | 15.45 | 230 | 1 090 | - | 7.4 | 0.6 | 3 529 | 950 | 15 | 13 |
| 2 | 4.75 | 11.22 | 0.2 | 1 090 | - | 7.4 | 0.6 | 2 590 | 910 | - | 13 |
| 3 | 5.86 | 8.82 | - | 18 | - | 7.2 | 0.6 | 2 010 | 905 | - | 11 |
| 4 | 10.75 | 8.02 | - | - | - | 0.07 | 0.05 | 1 960 | 895 | - | 10 |

**Table 9: Analysis of the filtrates, high solid phase and filtercakes**

| **Step** | **solution s.c. [%]** | **centrifuge s.c. [%]** | **filtercake s.c. [%]** | **Gypsum s.c. [%]** | **Fe [g/kg]** | **Cu [g/kg]** | **Zn,Ni, [g/kg]** | **Brightness L* [%]** |
|---|---|---|---|---|---|---|---|---|
| Orig. | - | - | - | - | | - | - | - |
| 1 | 2.51 | 36.30 | 59.90 | 100.00 | - | - | - | 93.35 |
| 2 | 1.53 | 10.73 | 54.90 | 36.40 | 31.00 | - | - | - |
| 3 | 2.30 | 35.00 | 69.00 | 2.00 | - | 43.25 | - | - |
| 4 | 0.87 | 11.35 | 19.97 | 11.30 | - | - | 1.70 | - |

The obtained precipitates were further analyzed with regard to the specific (BET) surface area as well as to its particle size distribution. The data obtained are outlined in Table 10.

**Table 10: Pigment data of precipitates**

| Step | **SSA [m²/g]** | ***d*₁₀ [%]** | ***d*₅₀ [%]** | ***d*₉₉ [%]** |
|---|---|---|---|---|
| Orig. | - | - | - | - |
| 1 | 1.91 | 1.50 | 10.93 | 60.04 |
| 2 | 13.01 | 0.90 | 2.50 | 23.75 |
| 3 | 6.80 | 1.20 | 5.30 | 28.11 |
| 4 | 5.05 | 2.30 | 5.33 | 32.10 |

## Claims

1. Process for the selective precipitation of at least one conjugate base and/or at least one metal cation from an acidic preparation by neutralization, the process comprising the steps of:
a) providing at least one calcium carbonate source having a weight median particle size *d*₅₀ from 0.1 to 500.0 µm in the form of a powder or an aqueous slurry,
b) providing an aqueous solution having a pH value from 0.0 to 7.0,
c) providing an acidic preparation comprising at least one conjugate base and/or at least one metal cation,
d) contacting the aqueous solution of step b) with the at least one calcium carbonate source of step a) for obtaining an aqueous slurry in which at least a part of the at least one calcium carbonate source is dissolved in the water phase of the aqueous slurry as calcium hydrogen carbonate,
e) contacting the acidic preparation of step c) with the aqueous slurry obtained in step d) for adjusting the pH of the resulting reaction mixture to a pH value being higher than the pH value of the acidic preparation of process step c) for precipitating the at least one conjugate base and/or the at least one metal cation from the acidic preparation as water insoluble salt/salts and optionally process step f) of stepwise increasing the pH value of the supernatant of the reaction mixture obtained in process step e),
wherein contacting step d) is carried out in that the pH value of the aqueous solution provided in process step b) is adjusted to a targeted pH by
i) the addition of the at least one calcium carbonate source provided in process step a), and/or
ii) the addition of the supernatant of the reaction mixture obtained in process step e) and/or process step f) if present and
wherein the process is a continuous process, wherein the supernatant of the reaction mixture obtained after separating the water insoluble salt/salts of the at least one conjugate base and/or the at least one metal cation from the reaction mixture is used as the aqueous solution of process step b).

2. Process according to claim 1, wherein the at least one calcium carbonate source of process step a) is a natural ground calcium carbonate and/or precipitated calcium carbonate and/or surface-modified calcium carbonate, preferably natural ground calcium carbonate.

3. Process according to claim 2, wherein the source of natural ground calcium carbonate (GCC) is selected from marble, chalk, dolomite, limestone and mixtures thereof and/or the precipitated calcium carbonate (PCC) is selected from one or more of the aragonitic, vateritic and calcitic mineralogical crystal forms.

4. Process according to any one of claims 1 to 3, wherein the at least one calcium carbonate source
a) has a weight median particle size *d*₅₀ from 0.1 to 150.0 µm preferably from 0.1 to 100.0 µm and more preferably from 0.5 to 60.0 µm, and/or
b) contains calcium carbonate in an amount of ≥ 90.0 wt.-%, preferably > 95.0 wt.-%, and most preferably from 97.0 to 99.9 wt.-%, based on the total weight of the at least one calcium carbonate source.

5. Process according to any one of claims 1 to 4, wherein the acidic preparation of process step c)
a) is selected from industrial waste water, urban waste water, waste water or process water from breweries or other beverage industries, waste water or process water in the paper industry, battery industry or battery recycling industry, colour, paints or coatings industries, galvanizing industry, mining industry, agricultural waste water, leather industry waste water and leather tanning industry, and/or
b) has a pH value being below the pH value of the aqueous slurry obtained in process step d), preferably from -1.0 to 7.0, more preferably from 0.0 to 5.0, and most preferably from 0.2 to 3.0.

6. Process according to any one of claims 1 to 5, wherein the aqueous slurry obtained in process step d)
a) has solids content of from 0.01 to 50.0 wt.-%, preferably from 0.1 to 40.0 wt.-% and most preferably from 0.2 to 30.0 wt.-%, based on the total weight of the aqueous slurry, and/or
b) has a pH value from 3.0 to 9.0 and preferably from 5.0 to 8.0.

7. Process according to any one of claims 1 to 6, wherein contacting step e) is carried out such that the obtained reaction mixture has a pH value being higher than the pH value of the acidic preparation of step c).

8. Process according to any one of claims 1 to 7, wherein process step d) and step e) are carried out in separate but successive reactors.

9. Process according to any one of claims 1 to 8, wherein process step f) is carried out by adding the aqueous slurry obtained in process step d) and/or at least one water soluble base such as sodium hydroxide, potassium hydroxide, calcium hydroxide and the like in form of an aqueous solution or slurry and/or at least one reactive component, such as a flocculent, coagulent and the like, suitable for precipitating of a further at least one conjugate base and/or at least one metal cation from the supernatant of the reaction mixture as water insoluble salt/salts.

10. Process according to claim 9, wherein process step e) and process step f) are carried out in separate but successive reactors, like three separate and successive reactors, preferably process step e) is carried out in a separate first reactor and in an optional separate but successive second reactor and process step f) is carried out in each separate but successive reactor following the separate first reactor or, if present, the separate but successive second reactor.

11. Process according to claim 10, wherein the pH in the separate first reactor and in the optional separate but successive second reactor is adjusted to a pH value being higher than the pH value of the acidic preparation of process step c), and the pH in each separate but successive reactor following the separate first reactor or, if present, the separate but successive second reactor is adjusted to a pH value being higher than the pH value of the reaction mixture in a previous reactor.

12. Process according to any one of claims 1 to 11, wherein the process further comprises process step g) of separating the water insoluble salt/salts of the at least one conjugate base and/or the at least one metal cation from the reaction mixture obtained in process step e) and/or process step f).

13. Use of an aqueous slurry of at least one calcium carbonate source for the selective precipitation of at least one conjugate base and/or at least one metal cation from an acidic preparation by neutralization according to claims 1 to 12, wherein the at least one calcium carbonate source has a weight median particle size *d*₅₀ from 0.1 to 500.0 µm.

14. The use according to claim 13, wherein the aqueous slurry of at least one calcium carbonate source
a) has solids content of from 0.01 to 50.0 wt.-%, preferably from 0.1 to 40.0 wt.-% and most preferably from 0.2 to 30.0 wt.-%, based on the total weight of the aqueous slurry, and/or
b) has a pH value from 3.0 to 9.0 and preferably from 5.0 to 8.0.

15. The use according to claim 13 or 14, wherein the at least one calcium carbonate source
a) is a natural ground calcium carbonate and/or precipitated calcium carbonate and/or surface-modified calcium carbonate, preferably natural ground calcium carbonate, and/or
b) has a weight median particle size *d*₅₀ from 0.1 to 150.0 µm, preferably from 0.1 to 100.0 µm and more preferably from 0.5 to 60.0 µm, and/or
c) contains calcium carbonate in an amount of ≥ 90.0 wt.-%, preferably ≥ 95.0 wt.-%and most preferably from 97.0 to 99.9 wt.-%, based on the total weight of the at least one calcium carbonate source.

## Patentansprüche

1. Verfahren zur selektiven Ausfällung von wenigstens einer konjugierten Base und/oder wenigstens einem Metallkation aus einer sauren Zubereitung durch Neutralisation, wobei das Verfahren die Schritte umfasst:
a) Bereitstellen von wenigstens einer Calciumcarbonatquelle mit einer gewichtsgemittelten Partikelgrösse *d*₅₀ von 0,1 bis 500,0 µm in der Form eines Pulvers oder einer wässrigen Aufschlämmung,
b) Bereitstellen von einer wässrigen Lösung mit einem pH-Wert von 0,0 bis 7,0;
c) Bereitstellen von einer sauren Zubereitung, umfassend wenigstens eine konjugierte Base und/oder wenigstens ein Metallkation,
d) Inkontaktbringen der wässrigen Lösung aus Schritt b) mit der wenigstens einen Calciumcarbonatquelle aus Schritt a), um eine wässrige Aufschlämmung zu erhalten, bei der wenigstens ein Teil der wenigstens einen Calciumcarbonatquelle in der Wasserphase der wässrigen Aufschlämmung als Calciumhydrogencarbonat gelöst ist,
e) Inkontaktbringen der sauren Zubereitung aus Schritt c) mit der in Schritt d) erhaltenen wässrigen Aufschlämmung zum Einstellen des pH des resultierenden Reaktionsgemischs auf einen pH-Wert, der höher ist als der pH-Wert der sauren Zubereitung aus Verfahrensschritt c), zum Ausfällen der wenigstens einen konjugierten Base und/oder des wenigstens einen Metallkations aus der sauren Zubereitung als wasserunlösliches Salz bzw. als wasserunlösliche Salze, und gegebenenfalls Verfahrensschritt f), bei dem schrittweise der pH-Wert des Überstands des Reaktionsgemischs, das in Verfahrensschritt e) erhaltenen wird, erhöht wird,
wobei der Kontaktierungsschritt d) so ausgeführt wird, dass der pH-Wert der in Verfahrensschritt b) bereitgestellten wässrigen Lösung auf einen Ziel-pH eingestellt wird durch
i) die Zugabe der in Verfahrensschritt a) bereitgestellten wenigstens einen Calciumcarbonatquelle, und/oder
ii) die Zugabe des Überstands des in Verfahrensschritt e) und/oder Verfahrensschritt f), falls vorhanden, erhaltenen Reaktionsgemischs, und
wobei das Verfahren ein kontinuierliches Verfahren ist, wobei der Überstand des Reaktionsgemischs, erhalten nach dem Abtrennen des wasserunlöslichen Salzes bzw. der wasserunlöslichen Salze der wenigstens einen konjugierten Base und/oder des wenigstens einen Metallkations aus dem Reaktionsgemisch, als die wässrige Lösung aus Verfahrensschritt b) verwendet wird.

2. Verfahren nach Anspruch 1, bei dem die wenigstens eine Calciumcarbonatquelle aus Verfahrensschritt a) ein natürliches, vermahlenes Calciumcarbonat und/oder ein gefälltes Calciumcarbonat und/oder ein oberflächenmodifiziertes Calciumcarbonat ist, bevorzugt ein natürliches, vermahlenes Calciumcarbonat.

3. Verfahren nach Anspruch 2, bei dem die Quelle von natürlichem, vermahlenem Calciumcarbonat (GCC) ausgewählt ist aus Marmor, Kreide, Dolomit, Kalkstein und Gemischen davon, und/oder das gefällte Calciumcarbonat (PCC) ist ausgewählt aus einer oder mehreren der aragonitischen, vateritischen und calcitischen mineralogischen Kristallformen.

4. Verfahren nach einem der Ansprüche 1 bis 3, bei dem die wenigstens eine Calciumcarbonatquelle
a) eine gewichtsgemittelte Partikelgrösse *d*₅₀ von 0,1 bis 150,0 µm aufweist, bevorzugt von 0,1 bis 100,0 µm, und bevorzugter von 0,5 bis 60,0 µm; und/oder
b) Calciumcarbonat in einer Menge von ≥ 90,0 Gew.-% enthält, bevorzugt ≥ 95,0 Gew.-%, und am meisten bevorzugt von 97,0 bis 99,9 Gew.-%, bezogen auf das Gesamtgewicht der wenigstens einen Calciumcarbonatquelle.

5. Verfahren nach einem der Ansprüche 1 bis 4, bei dem die saure Zubereitung aus Verfahrensschritt c)
a) ausgewählt ist aus Industrieabwasser, städtischem Abwasser, Abwasser oder Prozesswasser aus Brauereien oder anderen Getränkeindustrien, Abwasser oder Prozesswasser aus der Papierindustrie, Batterienindustrie oder Batterienrecyclingindustrie, Farbstoff-, Farben- oder Beschichtungsindustrien, Galvanisierungsindustrie, Bergbauindustrie, Landwirtschaftsabwasser, Lederinsdustrieabwasser und Ledergerbungsindustrie, und/oder
b) einen pH-Wert aufweist, der niedriger ist als pH-Wert der in Verfahrensschritt d) erhaltenen wässrigen Aufschlämmung, bevorzugt von -1,0 bis 7,0, bevorzugter von 0,0 bis 5,0, und am meisten bevorzugt von 0,2 bis 3,0.

6. Verfahren nach einem der Ansprüche 1 bis 5, bei dem die in Verfahrensschritt d) erhaltene wässrige Aufschlämmung
a) einen Feststoffgehalt von 0,01 bis 50,0 Gew.-% aufweist, bevorzugt von 0,1 bis 40,0 Gew.-%, und am meisten bevorzugt von 0,2 bis 30,0 Gew.-%, bezogen auf das Gesamtgewicht der wässrigen Aufschlämmung, und/oder
b) einen pH-Wert von 3,0 bis 9,0 aufweist, und bevorzugt von 5,0 bis 8,0.

7. Verfahren nach einem der Ansprüche 1 bis 6, bei dem der Kontaktierungsschritt e) so ausgeführt wird, dass das erhaltene Reaktionsgemisch einen pH-Wert aufweist, der höher ist als der pH-Wert der sauren Zubereitung aus Schritt c).

8. Verfahren nach einem der Ansprüche 1 bis 7, bei dem die Verfahrensschritte d) und e) in getrennten aber aufeinanderfolgenden Reaktoren ausgeführt werden.

9. Verfahren nach einem der Ansprüche 1 bis 8, bei dem Verfahrensschritt f) ausgeführt wird durch Zugeben der in Verfahrensschritt d) erhaltenen wässrigen Aufschlämmung und/oder wenigstens einer wasserlöslichen Base, wie Natriumhydroxid, Kaliumhydroxid, Calciumhydroxid und dergleichen, in der Form einer wässrigen Lösung oder Aufschlämmung und/oder wenigstens einer reaktiven Komponente, wie einem Flockungsmittel, Koagulationsmittel und dergleichen, geeignet zum Ausfällen einer weiteren, wenigstens einen konjugierten Base und/oder wenigstens einem Metallkation aus dem Überstand des Reaktionsgemischs als wasserunlösliches Salz bzw. wasserunlösliche Salze.

10. Verfahren nach Anspruch 9, bei dem Verfahrensschritt e) und Verfahrensschritt f) in getrennten aber aufeinanderfolgenden Reaktoren ausgeführt werden, wie drei getrennten und aufeinanderfolgenden Reaktoren, bevorzugt wird Verfahrensschritt e) in einem getrennten ersten Reaktor und in einem optional getrennten aber aufeinanderfolgenden zweiten Reaktor ausgeführt, und Verfahrensschritt f) wird in jedem getrennten aber aufeinanderfolgenden Reaktor, der dem getrennten ersten Reaktor, oder falls vorhanden, dem getrennten aber aufeinanderfolgenden zweiten Reaktor folgt, ausgeführt.

11. Verfahren nach Anspruch 10, bei dem der pH in dem getrennten ersten Reaktor und in dem optional getrennten aber aufeinanderfolgenden zweiten Reaktor auf einen pH-Wert eingestellt wird, der höher ist als der pH-Wert der sauren Zubereitung aus Verfahrensschritt c), und der pH in jedem getrennten aber aufeinanderfolgenden Reaktor, der dem getrennten ersten Reaktor, oder falls vorhanden, dem getrennten aber aufeinanderfolgenden zweiten Reaktor folgt, wird auf einen pH-Wert eingestellt, der höher ist als der pH-Wert des Reaktionsgemisch in einem vorhergehenden Reaktor.

12. Verfahren nach einem der Ansprüche 1 bis 11, bei dem das Verfahren ferner Verfahrensschritt g) umfasst, bei dem das wasserunlösliche Salz bzw. die wasserunlöslichen Salze der wenigstens einen konjugierten Base und/oder des wenigstens einen Metallkations aus dem in Verfahrensschritt e) und/oder Verfahrensschritt f) erhaltenen Reaktionsgemisch abgetrennt wird.

13. Verwendung einer wässrigen Aufschlämmung von wenigstens einer Calciumcarbonatquelle zur selektiven Ausfällung von wenigstens einer konjugierten Base und/oder wenigstens einem Metallkation aus einer sauren Zubereitung durch Neutralisation gemäss den Ansprüchen 1 bis 12, bei der die wenigstens eine Calciumcarbonatquelle eine gewichtsgemittelte Partikelgrösse *d*₅₀ von 0,1 bis 500,0 µm aufweist.

14. Verwendung nach Anspruch 13, bei der die wässrige Aufschlämmung der wenigstens einen Calciumcarbonatquelle
a) einen Feststoffgehalt von 0,01 bis 50,0 Gew.-% aufweist, bevorzugt von 0,1 bis 40,0 Gew.-%, und am meisten bevorzugt von 0,2 bis 30,0 Gew.-%, bezogen auf das Gesamtgewicht der wässrigen Aufschlämmung, und/oder
b) einen pH-Wert von 3,0 bis 9,0 aufweist, und bevorzugt von 5,0 bis 8,0.

15. Verwendung nach Anspruch 13 oder 14, bei der die wenigstens eine Calciumcarbonatquelle
a) ein natürliches, vermahlenes Calciumcarbonat und/oder ein gefälltes Calciumcarbonat und/oder ein oberflächenmodifiziertes Calciumcarbonat ist, bevorzugt ein natürliches, vermahlenes Calciumcarbonat, und/oder
b) eine gewichtsgemittelte Partikelgrösse *d*₅₀ von 0,1 bis 150,0 µm aufweist, bevorzugt von 0,1 bis 100,0 µm, und bevorzugter von 0,5 bis 60,0 µm, und/oder
c) Calciumcarbonat in einer Menge von ≥ 90,0 Gew.-% enthält, bevorzugt ≥ 95,0 Gew.-%, und am meisten bevorzugt von 97,0 bis 99,9 Gew.-%, bezogen auf das Gesamtgewicht der wenigstens einen Calciumcarbonatquelle.

## Revendications

1. Procédé de précipitation sélective d'au moins une base conjuguée et/ou d'au moins un cation métallique à partir d'une préparation acide par neutralisation, le procédé comprenant les étapes consistant à :
a) fournir au moins une source de carbonate de calcium ayant une taille de particule médiane en poids d₅₀ de 0,1 à 500,0 µm sous la forme d'une poudre ou d'une suspension aqueuse,
b) fournir une solution aqueuse ayant une valeur de pH de 0,0 à 7,0,
c) fournir une préparation acide comprenant au moins une base conjuguée et/ou au moins un cation métallique,
d) mettre en contact la solution aqueuse de l'étape b) avec l'au moins une source de carbonate de calcium de l'étape a) pour obtenir une suspension aqueuse dans laquelle au moins une partie de l'au moins une source de carbonate de calcium est dissoute dans la phase aqueuse de la suspension aqueuse sous forme d'hydrogénocarbonate de calcium,
e) mettre en contact la préparation acide de l'étape c) avec la suspension aqueuse obtenue à l'étape d) pour ajuster le pH du mélange réactionnel résultant à une valeur de pH supérieure à la valeur de pH de la préparation acide de l'étape c) du procédé pour faire précipiter l'au moins une base conjuguée et/ou l'au moins un cation métallique à partir de la préparation acide sous forme de sel(s) insoluble(s) dans l'eau et éventuellement l'étape f) du procédé consistant à augmenter progressivement la valeur du pH du surnageant du mélange réactionnel obtenu dans l'étape e) du procédé,
dans lequel l'étape de mise en contact d) est réalisée de sorte que la valeur de pH de la solution aqueuse fournie dans l'étape b) du procédé soit ajustée à un pH ciblé par
i) l'addition de l'au moins une source de carbonate de calcium fournie dans l'étape a) du procédé et/ou
ii) l'addition du surnageant du mélange réactionnel obtenu dans l'étape e) du procédé et/ou l'étape f) du procédé si présente et
dans lequel le procédé est un procédé continu, dans lequel le surnageant du mélange réactionnel obtenu après séparation du ou des sels insolubles dans l'eau de l'au moins une base conjuguée et/ou de l'au moins un cation métallique du mélange réactionnel est utilisé comme solution aqueuse de l'étape b) du procédé.

2. Procédé selon la revendication 1, dans lequel l'au moins une source de carbonate de calcium de l'étape a) du procédé est un carbonate de calcium broyé naturel et/ou un carbonate de calcium précipité et/ou un carbonate de calcium modifié en surface, de préférence un carbonate de calcium broyé naturel.

3. Procédé selon la revendication 2, dans lequel la source de carbonate de calcium broyé (GCC) naturel est choisie parmi le marbre, la craie, la dolomie, le calcaire et des mélanges de ceux-ci et/ou le carbonate de calcium précipité (PCC) est choisi parmi une ou plusieurs des formes cristallines minéralogiques de types aragonite, vatérite et calcite.

4. Procédé selon l'une quelconque des revendications 1 à 3, dans lequel l'au moins une source de carbonate de calcium
a) a une taille de particule médiane en poids *d₅₀* de 0,1 à 150,0 µm, de préférence de 0,1 à 100,0 µm et plus préférablement de 0,5 à 60,0 µm, et/ou
b) contient du carbonate de calcium en une quantité ≥ 90,0 % en poids, de préférence ≥ 95,0 % en poids, et de manière préférée entre toutes de 97,0 à 99,9 % en poids, par rapport au poids total de l'au moins une source de carbonate de calcium.

5. Procédé selon l'une quelconque des revendications 1 à 4, dans lequel la préparation acide de l'étape c) du procédé
a) est choisie parmi les eaux usées industrielles, les eaux usées urbaines, les eaux usées ou les eaux de traitement provenant de brasseries ou d'autres industries de boissons, les eaux usées ou les eaux de traitement provenant de l'industrie du papier, de l'industrie des batteries ou de l'industrie du recyclage des batteries, des industries des couleurs, des peintures ou des revêtements, de l'industrie de la galvanisation, de l'industrie minière, les eaux usées agricoles, les eaux usées de l'industrie du cuir et de l'industrie du tannage du cuir, et/ou
b) a une valeur de pH inférieure à la valeur de pH de la suspension aqueuse obtenue dans l'étape d) du procédé, de préférence de -1,0 à 7,0, plus préférablement de 0,0 à 5,0, et de manière préférée entre toutes de 0,2 à 3,0.

6. Procédé selon l'une quelconque des revendications 1 à 5, dans lequel la suspension aqueuse obtenue dans l'étape d) du procédé
a) a une teneur en matières solides de 0,01 à 50,0 % en poids, de préférence de 0,1 à 40,0 % en poids et de manière préférée entre toutes de 0,2 à 30,0 % en poids, par rapport au poids total de la suspension aqueuse, et/ou
b) a une valeur de pH de 3,0 à 9,0 et de préférence de 5,0 à 8,0.

7. Procédé selon l'une quelconque des revendications 1 à 6, dans lequel l'étape de contact e) est réalisée de sorte que le mélange réactionnel obtenu ait une valeur de pH supérieure à la valeur de pH de la préparation acide de l'étape c).

8. Procédé selon l'une quelconque des revendications 1 à 7, dans lequel l'étape d) et l'étape e) du procédé sont réalisées dans des réacteurs séparés mais successifs.

9. Procédé selon l'une quelconque des revendications 1 à 8, dans lequel l'étape f) du procédé est réalisée en ajoutant la suspension aqueuse obtenue dans l'étape d) du procédé et/ou au moins une base soluble dans l'eau telle que de l'hydroxyde de sodium, de l'hydroxyde de potassium, de l'hydroxyde de calcium et analogues sous la forme d'une solution ou d'une suspension aqueuse et/ou au moins un composant réactif, tel qu'un floculant, un coagulant et analogues, approprié pour la précipitation d'au moins une base conjuguée et/ou d'au moins un cation métallique à partir du surnageant du mélange réactionnel sous la forme d'un ou de sels insolubles dans l'eau.

10. Procédé selon la revendication 9, dans lequel l'étape e) du procédé et l'étape f) du procédé sont réalisées dans des réacteurs séparés mais successifs, comme trois réacteurs séparés et successifs, de préférence l'étape e) du procédé est réalisée dans un premier réacteur séparé et dans un deuxième réacteur séparé mais successif facultatif et l'étape f) du procédé est réalisée dans chaque réacteur séparé mais successif après le premier réacteur séparé ou, si présent, le deuxième réacteur séparé mais successif.

11. Procédé selon la revendication 10, dans lequel le pH dans le premier réacteur séparé et dans le deuxième réacteur séparé mais successif facultatif est ajusté à une valeur de pH supérieure à la valeur de pH de la préparation acide de l'étape c) du procédé et le pH dans chaque réacteur séparé mais successif après le premier réacteur séparé ou, si présent, le deuxième réacteur séparé mais successif, est ajusté à une valeur de pH supérieure à la valeur de pH du mélange réactionnel dans un réacteur précédent.

12. Procédé selon l'une quelconque des revendications 1 à 11, dans lequel le procédé comprend en outre l'étape g) du procédé de séparation du ou des sels insolubles dans l'eau de l'au moins une base conjuguée et/ou de l'au moins un cation métallique à partir du mélange réactionnel obtenu dans l'étape e) du procédé et/ou l'étape f) du procédé.

13. Utilisation d'une suspension aqueuse d'au moins une source de carbonate de calcium pour la précipitation sélective d'au moins une base conjuguée et/ou d'au moins un cation métallique à partir d'une préparation acide par neutralisation selon les revendications 1 à 12, dans laquelle l'au moins une source de carbonate de calcium a une taille de particule médiane de poids *d₅₀* de 0,1 à 500,0 µm.

14. Utilisation selon la revendication 13, dans laquelle la suspension aqueuse d'au moins une source de carbonate de calcium
a) a une teneur en matières solides de 0,01 à 50,0 % en poids, de préférence de 0,1 à 40,0 % en poids et de manière préférée entre toutes de 0,2 à 30,0 % en poids, par rapport au poids total de la suspension aqueuse, et/ou
b) a une valeur de pH de 3,0 à 9,0 et de préférence de 5,0 à 8,0.

15. Utilisation selon la revendication 13 ou 14, dans laquelle la suspension aqueuse d'au moins une source de carbonate de calcium
a) est un carbonate de calcium broyé naturel et/ou un carbonate de calcium précipité et/ou un carbonate de calcium modifié en surface, de préférence un carbonate de calcium broyé naturel, et/ou
b) a une taille de particule médiane en poids *d₅₀* de 0,1 à 150,0 µm, de préférence de 0,1 à 100,0 µm et plus préférablement de 0,5 à 60,0 µm, et/ou
c) contient du carbonate de calcium en une quantité ≥ 90,0 % en poids, de préférence ≥ 95,0 % en poids, et de manière préférée entre toutes de 97,0 à 99,9 % en poids, par rapport au poids total de l'au moins une source de carbonate de calcium.
